Europäisches Patentamt

European Patent Office

Office européen des brevets

(11) Numéro de publication: **0 343 285 B1**

(12) **FASCICULE DE BREVET EUROPEEN**

(19)

(12)

(45) Date de publication de fascicule du brevet: **05.08.92**  (51) Int. Cl.⁵: **A01G 9/12**

(21) Numéro de dépôt: **88200977.2**

(22) Date de dépôt: **17.05.88**

(54) **Dispositif de déroulage de corde pour la culture des tomates.**

(30) Priorité: **25.03.88 BE 8800351**

(43) Date de publication de la demande:
**29.11.89 Bulletin 89/48**

(45) Mention de la délivrance du brevet:
**05.08.92 Bulletin 92/32**

(84) Etats contractants désignés:
**BE DE ES FR GB LU NL**

(56) Documents cités:
**EP-A- 0 001 703**
**FR-A- 371 354**
**FR-A- 2 428 969**
**FR-A- 2 518 868**
**FR-A- 2 535 829**

(73) Titulaire: **KOORDENFABRIEK SAEY W. & F. N.V.**
**Lokerhoutstraat 31**
**B-9100 Lokeren(BE)**

(72) Inventeur: **Saey, Willy**
**Lokerhoutstraat 31**
**B-9100 Lokeren(BE)**

(74) Mandataire: **Donné, Eddy**
**Bureau M.F.J. Bockstael nv Arenbergstraat 13**
**B-2000 Antwerpen(BE)**

## Description

La présente invention a trait à un dispositif de déroulage de corde pour la culture des tomates.

Il est connu que pour la culture des tomates, et plus particulièrement pour la culture des tomates en serre, la soi-disante croissance à prolongement latéral est appliquée de plus en plus puisque celle-ci augmente considérablement la récolte par unité-surface, sans avoir à augmenter le nombre de plantes, entre autres grâce au fait que la plante peut être cultivée plus longtemps et qu'elle peut continuer à former des fruits.

Il est également connu que les plantes sont guidées par une corde durant cette croissance à prolongement latéral, où cette corde est placée à la verticale au départ entre le sol, plus particulièrement à l'endroit où la racine de la plante se situe, et un endroit défini aux alentours du toit de la serre où la corde est allongée par la fixation de plus en plus oblique de la corde durant la croissance de la plante et sa poussée en hauteur.

Une telle croissance à prolongement latéral est devenue possible puisque toutes les plantes sont quasiment placées sous un angle identique.

Afin de pouvoir réaliser la croissance à prolongement latéral en pratique la corde sus-mentionnée a été placée entre un endroit aux alentours de la racine de la plante et un câble qui est placé sur la longueur supérieure de la serre où, pour faciliter l'une et l'autre chose, l'on accroche par plante un élément en forme de crochet au câble formant non seulement un crochet mais qui est plié de telle façon qu'il forme également un élément de bobinage pour la corde.

Le but de ceci est d'accrocher ce crochet au-dessus de la plante avec une longueur verticale de corde le long de laquelle la plante peut grimper et déplacer ce crochet ensuite par rapport au câble sus-mentionné, après qu'un tour de corde de l'élément de bobinage a été libéré et d'obtenir ainsi graduellement un angle de croissance plus important durant la croissance de la plante.

Il est clair que cette façon connue de travail présente d'importants désavantages.

En effet un premier désavantage de cette façon de travail consiste en ce que le placement en oblique des plantes ne peut se faire que par une longueur de corde qui est égale à ou un multiple d'un tour de corde de l'élément de bobinage précité, c.-à-d. que le déplacement de ces crochets ne peut se faire selon les désirs du cultivateur et/ou la croissance de la plante, mais qu'il est toujours tributaire de la longueur du tour de corde.

Un autre désavantage de cette façon de travail connue jusqu'à présent est que, durant le dévidage d'un tour de corde, la plante doit être soutenue pour ainsi dire avec une main, tandis que la longueur de corde est débobinée avec l'autre main et que ce n'est qu'après cela qu'il est possible de déplacer le crochet et de lâcher la plante pour l'étendre à nouveau. Il est clair que ceci est un travail lourd puisque chaque plante doit être maintenue en hauteur durant le dévidage et que chaque plante représente un poids de plusieurs kilos.

Un autre désavantage de ce dispositif est que, après l'étiolement complet des plantes et plus particulièrement après que tous les fruits ont été récoltés, les cordes sont sectionnées pour les enlever avec les plantes et qu'en conséquence une certaine quantité de corde reste sur la partie de bobinage du crochet.

Ces crochets doivent ensuite être décrochés, placés dans des bacs tandis qu'il faut s'assurer qu'ils soient assez bien empilés afin d'éviter que les crochets s'entre accrochent pour ainsi dire et que ces crochets doivent ensuite être libérés un à un de la partie restante de la corde.

Ces crochets doivent en effet être enlevés du câble sus-mentionné puisque le nettoyage de la serre par arrosage serait par contre impossible puisque ces crochets pourraient se détacher du câble sus-mentionné et s'éparpiller au hasard dans la serre.

Un désavantage supplémentaire de ce dispositif est qu'avant que les crochets puissent être réutilisés, ceux-ci doivent être munis individuellement d'une longueur de corde appropriée, un travail qui doit être effectué à la main.

Un certain nombre desdits désavantages peuvent être résolus en utilisant un élément de bobinage pouvant tourner autour son axe, par exemple comme décrit au document EP-A-0.001.703. Pourtant l'utilisation d'éléments de bobinage rotatifs présente beaucoup d'inconvenients, e.a. la nécessité de démonter et monter les éléments de bobinage pendant le remplacement des éléments vides par des éléments prévus d'une nouvelle piece de corde.

Un dispositif de déroulage de corde qui évite les susdits et tout autre désadvantage du dispositif connu jusqu'à présent pour le guidage des plantes de tomates avec croissance à prolongement latéral, fait l'objet de la présente invention.

Le dispositif de déroulage, comme prévu par l'invention, est constitué par la combinaison d'un crochet pratiquement fermé; d'un élément qui peut contenir une quantité appropriée de corde; et des moyens de serrage qui permettent la fixation de la corde à n'importe quel endroit par rapport au crochet, et est caractérisé en ce que ledit élément qui peut contenir ladite quantité de corde est formé par un récipient, agencé de manière à pouvoir contenir une boule de corde.

Dans une forme d'exécution particulière, le récipient est pourvu d'une ouverture pour le guidage de la corde.

Selon une autre réalisation particulière le susdit récipient fera une pièce avec et sera directement relié au crochet, l'ouverture dans ce récipient pouvant être prévue à n'importe quel endroit de celle-ci.

Dans encore une autre réalisation selon l'invention, le récipient est constitué par une pièce séparée pouvant être reliée au crochet.

D'après une autre réalisation particulière on prévoira, entre l'endroit où la corde est guidée hors du récipient et l'endroit où les moyens de serrage sont prévus qui permettent de relier la corde au dispositif de déroulage selon l'invention, des trous ou des moyens de guidage par lesquels la corde peut être dirigée.

Dans le but de mieux démontrer les particularités de l'invention, des formes d'éxécution préférentielles sont décrites ci-après, comme exemples sans caractère restrictif, avec des références aux dessins ci-inclus, dans lesquels :

la figure 1 représente une vue avec coupe partielle d'un dispositif de déroulage selon l'invention ;

la figure 2 représente une vue similaire à celle de la figure 1, mais pour une variante ;

la figure 3 représente une réalisation suivant la figure 1 ;

la figure 4 représente une vue suivant la flèche F4 dans la figure 3 ;

la figure 5 représente une vue en coupe suivant la ligne V-V dans la figure 4 ;

la figure 6 représente une variante de la partie indiquée par F6 dans la figure 3 ;

la figure 7 représente une réalisation suivant la figure 2 ;

la figure 8 représente une vue suivant la fléche F8 dans la figure 7 ;

la figure 9 est une vue similaire à celle de la figure 8, mais avec le dispositif de déroulage en position de déroulage ;

la figure 10 représente une position particulière du dispositif de déroulage en position de travail ;

la figure 11 représente une vue suivant la fléche F11 dans la figure 10.

Un fil ou un câble 1 est représenté dans ces figures tel qu'il est placé le long d'une partie ou de la totalité de la longueur d'une serre et sur lequel des dispositifs de déroulage 2 de corde pour la culture des tomates peuvent être suspendus.

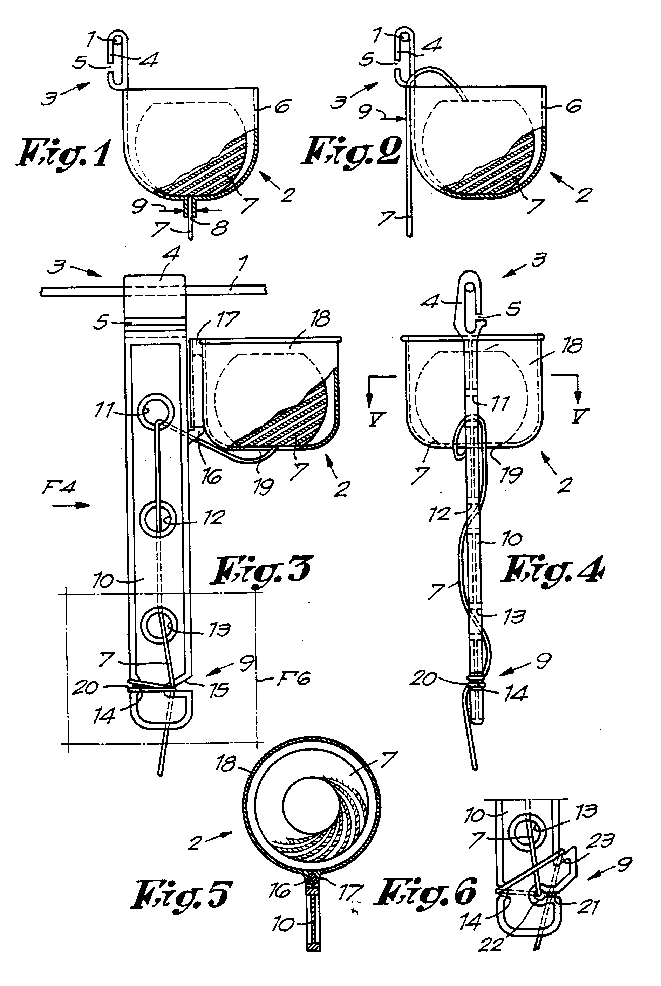

Dans la réalisation selon la figure 1 le dispositif de déroulage est substantiellement constitué par un crochet 3 qui est presque complètement fermé et qui est exécuté dans un matériau permettant une minime déformation élastique, l'un et l'autre de telle manière que ce crochet 3 peut être facilement accroché à un câble ou fil 1 par le pliage de la languette 4 et qu'ensuite cette languette 4 reprend sa position initiale et que le détachement de ce crochet du fil ou câble 1 ne soit plus possible sans intervention humaine puisque l'ouverture 5 de ce crochet est manifestement plus petite que le diamètre du câble 1.

Dans cette exécution le récipient 6 est ou non fabriqué du même matériau que celui du crochet 3 et qui forme oui ou non un ensemble avec celui-ci. Le récipient 6 peut contenir une quantité de corde 7 dont l'extrémité libre peut être passée par une ouverture 8 dans ce cas pratiquée dans le fond du récipient 6.

Autour de l'ouverture 8 sont prévus des moyens de serrage appropriés qui sont indiqués schématiquement par 9 et qui peuvent être formés de n'importe quelle manière, par exemple par des moyens qui influencent l'ouverture 8 pour maintenir la corde 7 à un endroit approprié par rapport au récipient 6.

Il est clair que de tels moyens de serrage peuvent être prévus de n'importe quelle façon, d'une part et que d'autre part l'ouverture sus-mentionnée peut être pratiquée tant du côté latéral qu'au bas du récipient afin de faciliter le serrage du fil à un endroit approprié.

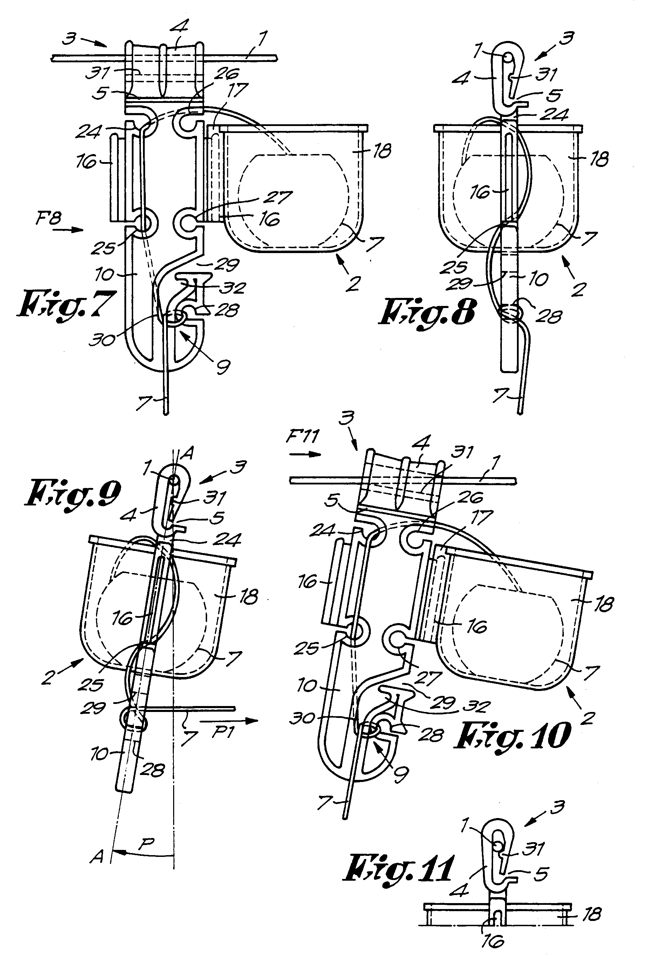

La figure 2 représente une variante qui démontre que, selon l'invention, la corde 7 peut être sortie facilement par le dessus du récipient 6 et que dans ce cas des moyens de serrage 9 peuvent étre prévus qui agissent sur le bord du récipient 6 afin de fixer la corde de manière appropriée par rapport au récipient 6.

Le serrage de la corde par rapport au récipient 6, respectivement par rapport au crochet 3, peut également se faire par l'enroulement de la corde autour d'un appendice ou similaire prévu sur le récipient 6, de telle façon que la plante de tomates fixée à la corde ne puisse pas glisser vers le bas.

Dans les réalisations selon les figures 3 à 5 le crochet 3 est prévu d'un prolongement en forme de latte 10 en l'occurence pourvu de trois orifices, respectivement 11, 12 et 13, cette latte étant pourvue d'une première rainure 14 et d'une deuxième rainure 15.

Sur la latte 10 est prévu un pivot 16 avec lequel peut cooperer un manchon 17 prévu à cet effet sur le côté latéral du récipient 18 qui présente un orifice 19.

De préférence, le pivot 16, d'une part, et la partie en forme de manchon 17, d'autre part, sont usinées en forme conique pour assurer un raccord solide entre 16 et 17.

Dans ce cas une quantité de corde 7 est également appliquée qui traverse l'orifice 19 et qui passe à travers les orifices 11, 12 et 13 pour être finalement fixée dans les rainures 14 et 15 dont le dernier présente un plan incliné afin d'appliquer un certain serrage sur un tour de corde 20 qui y est placé et d'éviter ainsi chaque déplacement de la corde par rapport à la latte 10 à cause d'un surbobinage de la corde sur soi-même, c'est-à-dire que le glissement vers le bas de la plante de tomates en question à cause de son poids est exclu.

La quantité de corde 7 sera de préférence formée par une boule de corde qui peut se dérouler à partir de l'intérieur et dont la longueur est suffisante pour une cultivation poussée complète, par exemple de l'ordre de 8 mètres.

Grâce au guidage de la corde à travers les orifices 11, 12 et 13 l'on parvient à obtenir avec la fixation de la corde dans les rainures 14 et 15 un freinage suffisant de la corde et où l'on parvient également à obtenir, quand la corde est libérée aux endroits des rainures 14 et 15, que la cultivateur puisse tout simplement presser la corde avec la pouce contre la latte 10 et cela entre les orifices 11,12 ou 12,13 afin d'éviter ou de permettre de quelque façon le déroulement de la corde et de refixer la corde ensuite dans les rainures 14 et 15 à l'aide de l'autre main.

Il est clair que la cultivateur ne doit alors pas supporter le poids de la plante avec la main.

Le déroulement de la corde 7 peut donc se faire selon le choix du cultivateur d'une longueur quelconque, où l'on peut s'assurer constamment que les plantes restent à la hauteur idéale dans la serre ce qui leur permet un meilleur développement et qui améliore manifestement la qualité et la quantité des fruits.

La figure 6 démontre une autre variante où la corde 7, à partir de l'orifice 13, via un passage 21, est amenée dans une rainure 22. La corde est ensuite dirigée vers la rainure 14 autour d'une languette 23 sur la latte 10, par laquelle la corde passe au-dessus d'une partie inférieure pour être ensuite dirigée vers la plante.

Dans les figures 7 à 11 une exécution est représentée qui est principalement réalisée de la même façon que la précédente, mais où la corde est dirigée par le dessus du récipient 18. Dans ce cas-ci la latte 10 est équipée de deux pivots 16 avec lesquelles le récipient peut cooperer et cette latte représente deux yeux respectivement 24-25 et 26-27. La latte 10 présente à sa partie inférieure à un côté un oeil 28 et disposée entre ce dernier et l'oeil 27 une entrée cunéiforme 29 qui est rallongée vers le bas jusqu'à une rainure 30 qui se termine à côté de l'oeil 28.

Dans ce cas-ci la corde 7 sort du haut d'un récipient 18 et passe alternativement à travers des yeux 24, 25, 28 tel que représenté dans la figure 9. Ensuite cette corde est rappelée vers le haut et placée dans la rainure 30 après avoir traversé l'entrée 29 pour se positionner de la manière telle que représenté dans les figures 7 et 8. Un creux interne 32 est prévu dans la rainure 30, à proximité de l'entrée 29.

L'entrée de la corde 7 dans la rainure 30 est facilitée par la forme cunéiforme de l'entrée 29.

Il est clair que la partie de corde disposée entre les yeux 25 et 28 est pincée par la partie de corde qui pend vers le bas entre la latte 10 et cette partie de corde qui pend vers le bas. De cette manière on évite le déroulement ultérieur de la boule de corde à cause du poids de la plante de tomates fixée à cette partie de corde qui pend vers le bas. Afin de permettre le déroulement ultérieur il suffit de simplement faire pivoter la latte 10, tel que représenté dans la figure 9, dans le sens de la flèche P vers une position oblique et de l'éloigner de la plante de tomates fixée à la corde 7, et d'appliquer ensuite une traction pratiquement perpendiculaire P1 au plan A-A où se trouve la latte 10 afin de rallonger adéquatement la partie de corde qui pend vers le bas.

Ce mouvement de rotation de la latte 10 vers le plan A-A fait déplacer vers le haut la partie de corde qui pend vers le bas à partir de la position représentée à la figure 9, ce qui a pour conséquence que la partie de corde située entre les yeux 25 et 28 se déplace également vers le haut et ceci jusqu'à la position maximale de positionnement de la partie de corde qui pend vers le bas dans l'ouverture interne 32 sus-mentionnée.

Il est clair que de cette manière le serrage de la partie de corde qui pend vers le bas est relâché sur la partie de la corde entre les yeux 28 et 25 afin que la partie de corde qui pend vers le bas peut être simplement rallongée par une traction sur la corde à travers les yeux 28, 25 et 24.

Lorsque le rallongement approprié de la partie de corde qui pend vers le bas est obtenu, on relâche la latte 10 afin qu'elle se positionne tel que représenté dans la figure 8 ce qui, grâce à l'influence du poids de la plante de tomates fixée à la corde qui pend vers le bas, permet à la partie de corde qui pend vers le bas d'être à nouveau tirée vers le bas dans la rainure 30 de telle manière que la partie de corde située entre les yeux 28 et 25 est automatiquement recoincée sous cette partie de corde qui pend vers le bas ce qui évite un déroulement ultérieur.

Dans une exécution particulière le crochet 3, et plus particulièrement la languette 4 de celui-ci, sera muni d'une nervure 31, d'une telle manière à ce qu'un déplacement involontaire du dispositif 2 le long du câble 1, lorsque le dispositif 2 est positionné tel que représenté à la figure 11, soit coincé, puisque la nervure 31 exercera une pression sur le câble 1 à ce moment et le crochet 3 se serrera pour ainsi dire sur le câble 1.

Il est clair que le récipient 3, respectivement 18, peut également être prévu dans des exécutions selon les figures 2, respectivement 7, 8 d'un orifice dans le bas du récipient, ce qui peut être utile lorsque le déroulage se fait par le haut, puisque les produits qui pourraient atterrir dans le récipient 3, respectivement 18, par exemple suite à un arrosage, peuvent alors simplement s'écouler par cet orifice.

Il est clair que la présente invention n'est aucunement limitée aux exécutions décrites en tant qu'exemple et représentées dans les dessins, mais qu'un tel dispositif de déroulage de corde pour la culture des tomates peut être réalisé en toute forme et dimension sans sortir du cadre des présentes revendications.

**Revendications**

1. Dispositif de déroulage de corde pour la culture des tomates en serre par la soi-disante croissance à prolongement latéral, c.-à-d. par laquelle la plante est guidée le long d'une corde qui est attachée de façon appropriée à un câble, ce dispositif étant constitué principalement en la combinaison d'un crochet (3) qui est presque complètement fermé; d'un élément qui peut contenir une quantité de corde (7) appropriée; et de moyens de serrage (9) qui permettent la fixation de la corde à n'importe quel endroit par rapport au crochet (3), caractérisé en ce que ledit élément qui peut contenir ladite quantité de corde (7) est formé par un récipient (6,18), agencé de manière à pouvoir contenir une boule de corde.

2. Dispositif de déroulage selon la revendication 1, caractérisé en ce que dans le récipient (6-18) une ouverture (8) est prévue par laquelle la corde (7) peut être déroulée.

3. Dispositif de déroulage selon la revendication 1 ou 2, caractérisé en ce que le crochet (3) est formé par un oeil ouvert dont au moins une languette (4) est elastiquement déformable pour fixer ce crochet à l'aide d'une ouverture (5) au câble (1).

4. Dispositif de déroulage selon la revendication 3, caractérisé en ce que l'ouverture (5) du crochet (3) est plus petite que l'épaisseur du câble ou de la corde (1).

5. Dispositif de déroulage selon la revendication 3, caractérisé en ce que le crochet (3) est muni d'une nervure interne (31).

6. Dispositif de déroulage selon la revendication 5, caractérisé en ce que la nervure (31) est prévue sur la face intérieure de la languette élastique (4).

7. Dispositif de déroulage selon l'une des revendications précédentes, caractérisé en ce que le récipient (6) (18) est directement relié au crochet (3).

8. Dispositif de déroulage selon la revendication 1, caractérisé en ce que des moyens de serrage (9) sont prévus qui peuvent retenir la corde par rapport au récipient (6).

9. Dispositif de déroulage selon la revendication 8, caractérisé en ce que des moyens de serrage (9) sont prévus autour de l'ouverture de déroulage (8).

10. Dispositif de déroulage selon l'une des revendications précédentes, caractérisé en ce que le bas du crochet (3) est prolongé par une latte (10) à laquelle, d'une part, un récipient (18) est fixé et dans lequel, d'autre part, des moyens de serrage (9) sont prévus.

11. Dispositif de déroulage selon la revendication 10, caractérisé en ce que le récipient (18) est muni d'un manchon (17) pouvant cooperer avec un pivot (16) prévu sur la latte (10).

12. Dispositif de déroulage selon la revendication 11, caractérisé en ce que le pivot (16) précité, respectivement le manchon (17), sont usinés tant en forme conique.

13. Dispositif de déroulage selon l'une des revendications précédentes 8 à 12, caractérisé en ce que les moyens de serrage 9) sont formés par un oeil ouvert (28) et une rainure (30) dans la latte (10).

14. Dispositif de déroulage selon la revendication 13, caractérisé en ce que l'entrée (29) de la rainure (30) est usinée de façon cunéiforme.

15. Dispositif de déroulage selon la revendication 13 ou 14 caractérisé en ce que l'extrémité fermée de la rainure (30) est située à côté de l'oeil ouvert (28).

16. Dispositif de déroulage selon l'une des revendications 8 à 15, caractérisé en ce que à chaque côté de la latte (10) deux yeux ouverts, respectivement (24-25) et (26-27), sont prévus entre les moyens de serrage (9), plus particulièrement l'oeil ouvert (28) et la rainure (30) avec entrée (29) et l'ouverture du récipient (18).

17. Dispositif de déroulage selon l'une des revendications 8 à 12, caractérisé en ce que les moyens de serrage (9) sont formés par au moins une rainure (15)(22) dans la latte (10).

**18.** Dispositif de déroulage selon l'une des revendications 8 à 12, caractérisé en ce que les moyens de serrage (9) sont formés par deux rainures, respectivement (14) et (15)(22), dans la latte (10).

**19.** Dispositif de déroulage selon la revendication 17 ou 18, caractérisé en ce que la rainure (15) présente au moins un plan incliné.

**20.** Dispositif de déroulage selon la revendication 17 ou 18, caractérisé en ce que la rainure (22) est reliée au côté extérieur de la latte (10), par un passage (21).

**21.** Dispositif de déroulage selon la revendication 20, caractérisé en ce qu'une languette (23) est prévue au dessus du passage (21).

**22.** Dispositif de déroulage selon l'une des revendications 8 à 11 et 17 à 21, caractérisé en ce de deux ou plusieurs orifices (11,12,13) sont prévus entre les moyens de serrage (9) et l'orifice (19) dans le récipient par lesquels la corde (7) est passée.

**Claims**

**1.** Cord unwinding device for the cultivation of tomatoes in greenhouses by the so-called lateral extension growth, this means by which the plant is guided along a cord which is attached in appropriate manner to a cable, this device principally consisting in the combination of a hook (3) which is almost completely closed; of an element which can contain an appropriate quantity of cord (7); and tightening means (9) which permit the attachment of the cord to any location in relation to the hook (3), characterised in that the aforementioned element which can contain the aforementioned quantity of cord (7) is formed by a receptacle (6, 18), arranged in a manner to be able to contain a ball of cord.

**2.** Unwinding device according to claim 1, characterised in that in the receptacle (6-18) an opening (8) is provided through which the cord (7) can be unwound.

**3.** Unwinding device according to claim 1 or 2, characterised in that the hook (3) is formed by an open eye of which at least the tongue (4) is elastically deformable for fixing the hook to the cable (1) with the assistance of an opening (5).

**4.** Unwinding device according to claim 3, characterised in that the opening (5) of the hook (3) is smaller than the thickness of the cable or of the cord (1).

**5.** Unwinding device according to claim 3, characterised in that the hook (3) is equipped with an internal rib (31).

**6.** Unwinding device according to claim 5, characterised in that the rib (31) is provided on the interior surface of the elastic tongue (4).

**7.** Unwinding device according to any of the preceding claims, characterised in that the receptacle (6) (18) is directly connected to the hook (3).

**8.** Unwinding device according to claim 1, characterised in that tightening means (9) are provided which can hold back the cord in relation to the receptacle (6).

**9.** Unwinding device according to claim 8, characterised in that tightening means (9) are provided around the unwinding opening (8).

**10.** Unwinding device according to any of the preceding claims, characterised in that the bottom of the hook (3) is extended by a slat (10) to which, on the one hand, a receptacle (18) is attached and in which, on the other hand, tightening means (9) are provided.

**11.** Unwinding device according to claim 10, characterised in that the receptacle (18) is equipped with a socket (17) being able to work together with a pivot (16) provided on the slat (10).

**12.** Unwinding device according to claim 11, characterised in that the aforementioned pivot (16), respectively the socket (17), are so machined in conical form.

**13.** Unwinding device according to any of the preceding claims 8 to 12, characterised in that the tightening means (9) are formed by an open eye (28) and a groove (30) in the slat (10).

**14.** Unwinding device according to claim 13, characterised in that the entrance (29) of the groove (30) is machined in cuneiform manner.

**15.** Unwinding device according to claim 13 or 14, characterised in that the closed extremity of the groove (30) is situated next to the open eye (28).

**16.** Unwinding device according to any of the claims 8 to 15, characterised in that on each side of the slat (10) two open eyes, respectively (24-25) and (26-27), are provided between the tightening means (9), more particularly the open eye (28) and the groove (30) with entrance (29) and the opening of the receptacle (18).

**17.** Unwinding device according to any of the claims 8 to 12, characterised in that the tightening means (9) are formed by at least one groove (15) (22) in the slat (10).

**18.** Unwinding device according to any of the claims 8 to 12, characterised in that the tightening means (9) are formed by two grooves, respectively (14) and (15) (22), in the slat (10).

**19.** Unwinding device according to claim 17 or 18, characterised in that the groove (15) shows at least one inclined plane.

**20.** Unwinding device according to claim 17 or 18, characterised in that the groove (22) is connected to the exterior side of the slat (10), by a passage (21).

**21.** Unwinding device according to claim 20, characterised in that a tongue (23) is provided above the passage (21).

**22.** Unwinding device according to any of the claims 8 to 11 and 17 to 21, characterised in that two or more orifices (11, 12, 13) are provided between the tightening means (9) and the orifice (19) in the receptacle through which the cord (7) is passed.

**Patentansprüche**

**1.** Vorrichtung zur Abwicklung von Schnur zum Anbau von Tomaten im Treibhaus mittels des sogenannten Wachstums durch seitliche Verlängerung d. h. durch welche die Pflanze geführt wird an einer Schnur entlang die in geeigneter Weise an einen Kabel befestigt worden ist, die Vorrichtung hauptsächlich bestehend aus der Kombination eines Hakens (3) der nahezu völlig geschlossen ist; aus einem Element das eine geeignete Menge Schnur (7) enthalten kann; und aus Klammern (9) welche die Befestigung der Schnur ermöglichen an jeder beliebigen Stelle in bezug auf den Haken (3); gekennzeichnet dadurch daß das genannte Element das die genannte Menge Schnur (7) enthalten kann gebildet wird von einem Behälter (6,18) so ausgeführt das er einen Schnurball enthalten kann.

**2.** Vorrichtung zur Abwicklung laut Anspruch 1, gekennzeichnet dadurch daß im Behälter (6-18) eine Öffnung (8) vorgesehen ist durch welche die Schnur (7) abgewickelt werden kann.

**3.** Vorrichtung zur Abwicklung laut Anspruch 1 oder 2, gekennzeichnet dadurch daß der Haken (3) gebildet wird von einer offenen Öse von der mindestens eine Zunge elastisch deformiert werden kann um den Haken mittels einer Öffnung (5) an den Kabel (1) zu befestigen.

**4.** Vorrichtung zur Abwicklung laut Anspruch 3, gekennzeichnet dadurch daß die Öffnung (5) des Hakens kleiner ist als der Durchmesser des Kabels oder der Schnur (1)

**5.** Vorrichtung zur Abwicklung laut Anspruch 3, gekennzeichnet dadurch daß der Haken (3) innerlich mit einer Rippe (31) ausgestattet ist.

**6.** Vorrichtung zur Abwicklung laut Anspruch 5, gekennzeichnet dadurch daß die Rippe vorgesehen ist auf die innere Fläche der elastischen Zunge (4).

**7.** Vorrichtung zur Abwicklung laut eines der vorhergehenden Ansprüche 3 gekennzeichnet dadurch daß der Behälter (6) (18) unmittelbar wieder verbunden ist mit dem Haken (3).

**8.** Vorrichtung zur Abwicklung laut Anspruch 1, gekennzeichnet dadurch daß Klammer (9) vorgesehen sind welche die Schnur in bezug auf den Behälter (6) festhalten können.

**9.** Vorrichtung zur Abwicklung laut Anspruch 8, gekennzeichnet dadurch daß Klammer (9) vorgesehen sind um die Abwickelöffnung (8) herum.

**10.** Vorrichtung zur Abwicklung laut einer der vorhergehenden Ansprüche, gekennzeichnet dadurch daß die Unterseite des Hakens (3) durch eine Latte (10) verlängert worden ist an die einerseits ein Behälter (18) befestigt worden ist und worin, andererseits, Klammer (9) vorgesehen sind.

**11.** Vorrichtung zur Abwicklung laut Anspruch 10, gekennzeichnet dadurch daß der Behälter (18) ausgestattet ist mit einer Muffe (17) die imstande ist mit einer Achse (16) zusammenzuwirken die auf der Latte (10) vorgesehen ist.

**12.** Vorrichtung zur Abwicklung laut Anspruch 11, gekennzeichnet dadurch daß die vorher erwähnte Achse (16), respektive die Muffe (17), in konischer Form angefertigt worden sind.

**13.** Vorrichtung zur Abwicklung laut eines der vorhergehenden Ansprüche 8 bis 12, gekennzeichnet dadurch daß die Klammer (9) gebildet werden von einer offenen Ose (28) und einer Rinne (30) in der Latte (10).

**14.** Vorrichtung zur Abwicklung laut Anspruch 13, gekennzeichnet dadurch daß der Zugang (29) der Rinne (30) keilförmig angefertigt worden ist.

**15.** Vorrichtung zur Abwicklung laut Anspruch 13 oder 14, gekennzeichnet dadurch daß das geschlossene Ende der Rinne (30) sich an der Seite der geöffneten Öse (28) befindet.

**16.** Vorrichtung zur Abwicklung laut eines der Ansprüche 8 bis 15, gekennzeichnet dadurch daß an jeder Seite der Latte (10) zwei offene Ösen, respektive (24-25) und (26-27) vorgesehen sind zwischen den Klammern (9), besonders die offene Öse (28) und die Rinne (30) mit Zugang (29) und Öffnung des Behälters (18).

**17.** Vorrichtung zur Abwicklung laut eines der Ansprüche 8 bis 12, gekennzeichnet dadurch daß die Klammer (9) gebildet sind aus mindesten einer Rinne (15) (22) in der Latte (10).

**18.** Vorrichtung zur Abwicklung laut eines der Ansprüche 8 bis 12, gekennzeichnet dadurch daß die Klammer (9) gebildet sind aus zwei Rinnen, respektive (14) und (15) (22) in der Latte (10).

**19.** Vorrichtung zur Abwicklung laut Anspruch 17 oder 18, gekennzeichnet dadurch daß die Rinne (15) mindestens eine schräge Ebene aufweist.

**20.** Vorrichtung zur Abwicklung laut Anspruch 17 oder 18, gekennzeichnet dadurch daß die Rinne (22) an der Aussenseite der Latte wieder verbunden ist, durch einen Durchgang (21).

**21.** Vorrichtung zur Abwicklung laut Anspruch 20, gekennzeichnet dadurch daß eine Zunge (23) vorgesehen ist unterhalb des Durchganges.

**22.** Vorrichtung zur Abwicklung laut eines der Ansprüche 8 bis 11 und 17 bis 21 gekennzeichnet dadurch daß zwei oder mehr Öffnungen (11, 12, 13) vorgesehen sind zwischen die Klammer (9) und die Öffnung (19) im Behälter durch der die - Schnur (7) geführt worden ist.

Fig.1

Fig.2

Fig.3

Fig.4

Fig.5

Fig.6

Fig.7

Fig.8

Fig.9

Fig.10

Fig.11